# EUROPÄISCHE PATENTSCHRIFT

(11) **EP 0 903 714 B1**
(45) Veröffentlichungstag und Bekanntmachung des Hinweises auf die Patenterteilung: **05.11.2003**
(21) Anmeldenummer: 98115901.5
(22) Anmeldetag: 24.08.1998
(51) Int. Cl.: G08G 1/16

(54) **Verfahren und Vorrichtung zur Vermeidung und/oder Minimierung von Konfliktsituationen im Strassenverkehr**
Method and device for avoiding and/or minimising conflictual situations in road traffic
Procédé et appareil pour éviter et/ou minimiser les situations de conflit dans le trafic routier

(30) Priorität: 20.09.1997 DE 19741631
(43) Veröffentlichungstag der Anmeldung: 24.03.1999
(73) Patentinhaber: Volkswagen Aktiengesellschaft, 38436 Wolfsburg (DE)
(72) Erfinder: Zander, André, 38820 Halberstadt (DE); Wiesner, Uwe, 38112 Braunschweig (DE)
(74) Vertreter: Zucker, Volker, Dipl.-Ing.

(56) Entgegenhaltungen:
- DE-A- 19 547 333
- US-A- 5 204 536
- US-A- 5 626 359

## Beschreibung

Die Erfindung betrifft ein Verfahren und eine Vorrichtung zur Vermeidung und/oder Minimierung von Konfliktsituationen im Straßenverkehr für den Einsatz in einem Kraftfahrzeug.

Die Entwicklung hat in den letzten Jahren auf den Straßen zu einem rapiden Anstieg der Verkehrsdichte und der Informationsflut geführt. Das Fahren von Kraftfahrzeugen wird somit zu einem komplexen Vorgang, bei dem der Fahrzeugführer in kritische Situationen gebracht werden kann, in denen er im Rahmen seiner Möglichkeiten überfordert ist.

Daher muß es das Ziel sein, den Fahrzeugführer insbesondere in kritischen Situationen zu entlasten. Sogenannte Fahrer-Assistenz-Systeme dienen dazu, den Fahrzeugführer auf bestimmte Gefahren hinzuweisen. So wird zur Definition eines Gefährdungsgrades, in dem sich ein Fahrzeug aufgrund dichten Verkehrsaufkommens und geringer Sichtweite befindet, in der DE 42 14 817 A1 vorgeschlagen, über Abstandserfassungseinrichtungen den Weg zum vorausfahrenden Fahrzeug, die Relativgeschwindigkeit zwischen den beiden Fahrzeugen bzw. zwischen dem Fahrzeug und einem Hindernis über ein Infrarot-Sichtweiten-Meßsystem, die aktuelle Sichtweite sowie die Augenblicksgeschwindigkeit des Fahrzeuges und den Lenkwinkel zu erfassen. In Abhängigkeit dieser Größen wird in einem ersten Verfahrensschritt ein Maß für einen gefahrlosen Folgeabstand zu einem Frontfahrzeug bzw. einem Hindernis definiert und damit ein Hinweis auf eine gegebenenfalls vergrößerbare oder zu verringernde Augenblicksgeschwindigkeit zur Anzeige gebracht. In einem zweiten Verfahrensschritt wird in Abhängigkeit der gemessenen Sichtweite eine noch sicher fahrbare Geschwindigkeit berechnet und dieser Geschwindigkeitswert mit dem Abstandsgeschwindigkeitswert verglichen, wobei der geringere bzw. der negativere beider Werte zur Warnung des Fahrzeugführers zur Anzeige gebracht wird. Ein solches Fahrer-Assistenz-System kann jedoch nur mittelbar dazu beitragen, Unfälle zu vermeiden, da es auf die Annahme dieser Hinweise vom Fahrzeugführer angewiesen ist.

Darüber hinaus haben in den letzten Jahren passive Sicherheitssysteme Einzug im Kraftfahrzeug gehalten (z. B. Airbag, Seitenaufprallschutz). Diesen Systemen ist gemeinsam, dass sie erst aktiviert werden, wenn ein Zusammenstoß erfolgt ist. So können solche Sicherheitssysteme einen Unfall nicht verhindern, sondern nur dessen Folgen für die Insassen des Kraftfahrzeuges mindern.

Des weiteren sind verschiedene Sitzbelegungserkennungseinrichtungen bekannt, mittels derer erfassbar ist, ob ein Fahrzeug besetzt ist. Diese Information wird beispielsweise zur Feststellung benötigt, ob ein Beifahrer-Airbag ausgelöst werden muss oder nicht. Zusätzlich kann mit der Sitzbelegungserkennungseinrichtung erfasst werden, was für eine Physiognomie die Person auf dem Fahrzeugsitz aufweist, wozu beispielsweise Videokameras, Gewichtssensoren oder ähnliches zur Anwendung kommen. Aufgrund der erfassten Physiognomie kann dann der Gasdruck des Airbags entsprechend gesteuert werden, so dass Verletzungen durch die Auflösung des Airbags vermieden werden.

Aus der US-5,626,359 ist ein Verfahren und eine Vorrichtung zum Steuern eines Insassenrückhaltesystems bekannt, umfassend Abtastmittel zum Abtasten von mindestens zwei Parametern, die eine Insassenrückhaltefunktion des Rückhaltesystems beeinträchtigen bzw. beeinflussen können, Regulier- bzw. Regelungsmittel, die betriebsmäßig mit einer Insassenrückhalteeinrichtung des Insassenrückhaltesystems verbunden sind, um die Insassenrückhaltefunktion der Insassenrückhalteeinrichtung ansprechend auf ein Steuersignal zu regulieren bzw. zu regeln, und Steuermittel, die betriebsmäßig mit den Abtastmitteln und dem Regulier- bzw. Regelungsmitteln verbunden sind, um eine von einer Vielzahl von diskreten Steuerzonen auszuwählen, und zwar abhängig von den mindestens zwei abgetasteten Parametern, und zwar zum Vorsehen des Steuersignals auf der Grundlage der ausgewählten einen der diskreten Steuerzonen.

Die Vermeidung eines Unfalls wird durch den Einsatz von aktiven Sicherheitssystemen wie dem ABS möglich. Die Voraussetzung zum Ansprechen des Antiblockiersystems ist jedoch, dass der Fahrer die Unfallgefahr erkannt hat und eine entsprechend hohe Verzögerung fordert. Somit ist der erfolgreiche Einsatz der aktiven Sicherheitssysteme ebenfalls unmittelbar vom Fahrzeugführer abhängig. Aus diesem Grund wurden Verfahren und Einrichtungen zum Verhindern von Zusammenstößen mit vorausfahrenden Fahrzeugen entwickelt, die aufgrund einer gewissen Eigenständigkeit in der Lage sind, Auffahrunfälle zu vermeiden. Als Beispiel wird die europäische Patentanmeldung EP 545 437 A2 erwähnt, die ein Verfahren zum Vermeiden von Kollisionen von Kraftfahrzeugen beschreibt. Bei dem bekannten Verfahren wird das Ausgangssignal einer Abstandsmessvorrichtung einer Auswertevorrichtung zugeführt. Der Messbereich der Abstandsvorrichtung wird in Sicherheitszonen eingeteilt, die sich im unterschiedlichen Abstand vom Kraftfahrzeug entfernt befinden und denen eine individuelle Reaktionsmaßnahme zugeordnet ist. Eine solche Reaktionsmaßnahme ist in erster Linie ein Hinweis für den Fahrzeugführer auf eine bevorstehende Kollision. Reagiert der Fahrzeugführer auf diesen Hinweis nicht, wird selbsttätig eine Maßnahme zur Verringerung der Kollisionsgefahr eingeleitet. Für die Festlegung der Sicherheitszonen werden einerseits fahrzeugspezifische Parameter, wie Geschwindigkeit und weitere Faktoren, die Auswirkungen auf das Beschleunigungsverhalten (z. B. die Beladung des Kraftfahrzeuges, als auch die Fahrbahnbeschaffenheit sowie die Sichtweite) haben, berücksichtigt. Ein solches System reagiert jedoch durch Warnung oder Bremseingriff immer nur auf ein vorausfahrendes Kraftfahrzeug oder ein vor dem Fahrzeug befindliches Hindernis, um ein Auffahren auf dieses Kraftfahrzeug bzw. Hindernis zu verhindern.

Aus der DE 196 47 283 ist eine Vorrichtung zur Vermeidung und/oder Minimierung von Konfliktsituationen im Straßenverkehr bekannt, die Mittel zum Erfassen von einzelnen Teilen der Umgebung eines die Vorrichtung tragenden Kraftfahrzeuges aufweist. Diese einzelnen Umgebungsinformationen können im einfachsten Fall Ausgangssignale von Sensoreinrichtungen zur Erkennung von einem oder mehreren Hindernissen sein, wobei für die Klassifizierung der Hindernisse mindestens der Abstand und die Relativgeschwindigkeit zwischen dem Kraftfahrzeug und dem erkannten Hindernis sowie dessen Größe erfaßt wird.

Daneben können vorteilhafterweise die Mittel zum Erfassen einzelner Teile der Fahrzeugumgebung auch Einrichtungen zum Ermitteln des Streckenverlaufs (z. B. Kurvenradien der Straße), der vorherrschenden Sichtweite und des Fahrbahnzustandes oder beispielsweise Mittel zur Erkennung von Straßen- bzw. Hinweisschildern und/oder Ampeln umfassen.

Aus diesen Einzelinformationen wird in nachgeschalteten Mitteln zur Bewertung des Abbildes und/oder Teilen diesen Abbildes ein Abbild bzw. Modell der Fahrzeugumgebung erstellt und bewertet. Zusätzlich wird über weitere Mittel das Fahrzeugverhalten des Kraftfahrzeuges erfaßt. Hier sind als Beispiele Sensoren, die die Fahrrichtung und die Längs- und Querbewegungen bzw. Geschwindigkeiten erfassen, zu nennen. Die Ausgangssignale der genannten Mittel werden an Mittel zur Bewertung des momentanen Fahrverhaltens abgegeben.

Sowohl die Signale der Mittel zur Bewertung des Abbildes und/oder Teilen dieses Abbildes als auch die Ausgangssignale der Mittel zur Bewertung des Fahrverhaltens des Kraftfahrzeuges werden einer Verarbeitungseinrichtung zugeleitet, die aus diesen Ausgangssignalen eine physikalische Grenze zur Vermeidung einer Konfliktsituation ermittelt. Wird diese physikalische Grenze erreicht bzw. überschritten, erzeugen nachgeschaltete Mittel Steuersignale für die die Fahrfunktionen des Kraftfahrzeuges beeinflussenden Mittel, zumindest für die Brems-/Beschleunigungs- und/oder Lenkeinrichtung des Kraftfahrzeuges, entsprechend der Ausgangssignale der Mittel für die Bewertung des Abbildes der Umgebung der Mittel der Bewertung des Fahrverhaltens des Kraftfahrzeugs, d. h. es wird unmittelbar auf die die Fahrfunktionen des Kraftfahrzeuges beeinflussenden Mittel eingewirkt.

Nach der Übernahme der Fahrfunktionen durch die Vorrichtung ist es deren Aufgabe, die drohende Konfliktsituation zu entschärfen, d. h. den Unfall zu vermeiden. In einzelnen Fällen wird dieses nicht immer möglich sein. Hier werden die Mittel zum Erzeugen von Steuersignalen für die aktiven Fahrfunktionen außerdem Steuersignale zur Aktivierung der passiven Sicherheitssysteme (z. B. Airbag, Wamblinkanlage oder Notrufeinrichtungen) aussenden.

In Fällen, in denen eine Gefahr frühzeitig erkannt wurde, unter gewissen Umständen eine Konfliktsituation jedoch unvermeidbar ist, führt die Vorrichtung eine Maßnahme zur Schadensbegrenzung durch, indem sie beispielsweise die Kollision mit einer Mülltonne auf dem Bürgersteig dem Zusammenstoß mit einer auf der Fahrbahn befindlichen Person vorzieht.

Der Erfindung liegt daher das technische Problem zugrunde, ein Verfahren und eine Vorrichtung zur Vermeidung und/oder Minimierung von Konfliktsituationen zu schaffen, mittels derer eine weitere Minimierung von Schäden bei unvermeidlichen Konfliktsituationen erreicht wird.

Die Lösung des technischen Problems ergibt sich durch die Merkmale der Patentansprüche 1 und 6. Durch die Zuordnung einer Sitzbelegungserkennungseinrichtung, von deren erfaßten Daten abhängig die Steuersignale erzeugt werden, ist es bei unvermeidlichen Kollisionen verstärkt möglich, einen Kollisionskurs zu bestimmen, mittels dessen insbesondere Personenschäden minimiert werden. Der Grundgedanke besteht darin, die vorhandenen Schutzzonen, die ein Kraftfahrzeug aufweist, jeweils optimal zu nutzen. So kann beispielsweise eine gezielte Kollision gegen die Beifahrertür bzw. gegen den seitlichen Bereich auf der Beifahrerseite für den Kraftfahrzeugführer weit weniger gefährlich sein als eine frontale Kollision. Anders stellt sich die Situation jedoch dar, falls der Beifahrersitz besetzt ist, da dann das zuvor beschriebene Manöver für den Beifahrer tödlich sein könnte. In diesem Fall könnte eine direkte Kollision bezüglich der Verletzungsfolgen für Fahrer und Beifahrer günstiger sein. Durch die Kenntnis der Sitzbelegung entsteht somit ein weiterer Freiheitsgrad, um bei einer Kollision den Schaden zu minimieren. Weitere vorteilhafte Ausgestaltungen der Erfindung ergeben sich aus den Unteransprüchen.

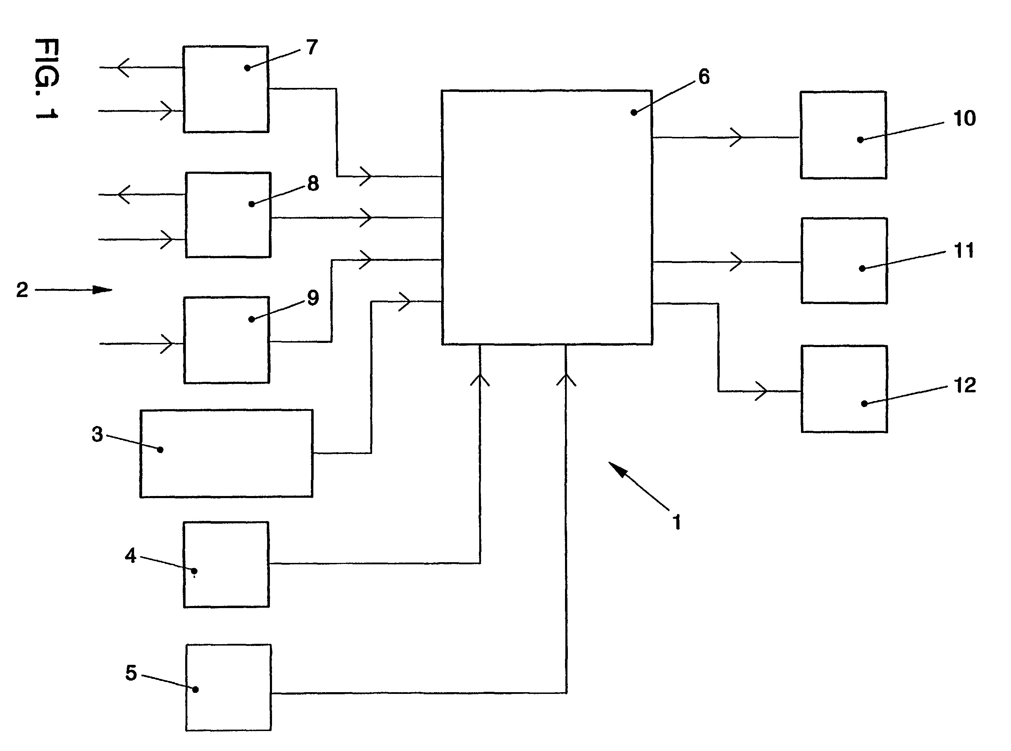

Die Erfindung wird nachfolgend anhand eines bevorzugten Ausführungsbeispiels näher erläutert. Die einzige Figur zeigt eine Blockschaltbild der Vorrichtung zur Vermeidung und/oder Minimierung von Konfliktsituationen im Straßenverkehr.

Die Vorrichtung 1 zur Vermeidung und/oder Minimierung von Konfliktsituationen im Straßenverkehr umfaßt eine Einrichtung 2 zur Erfassung eines Abbildes der Umgebung eines Kraftfahrzeuges, eine Sitzbelegungserkennungseinrichtung 3, Sensoren 4, 5 zur Erfassung von Fahrzeugzustandsdaten und eine Auswerteeinrichtung 6. Die Einrichtung 2 umfaßt hier eine Anzahl von Lasar-Sensoren 7, Radar-Sensoren 8 und Kameras 9 oder eine Kombination aus diesen, die derart ausgebildet sind, daß diese vollständig die Umgebung um das Kraftfahrzeug herum erfassen. Durch die Kombination verschiedener Sensoren 7 - 9 wird nicht nur eine gewisse Redundanz erreicht, sondern auch eine optimale Adaption an die jeweils vorherrschenden Umgebungsbedingungen erzielt. So nimmt beispielsweise die Zuverlässigkeit der Laser-Sensoren 7 bei Regen oder Schnee erheblich ab, nicht jedoch die der Radar-Sensoren 8. Bei Dunkelheit hingegen ist das Erfassungsvermögen von VideoKameras stark eingeschränkt, nicht jedoch das von Laser-Sensoren 7, Radar-Sensoren 8 oder einer Wärmebild-Kamera 9. Die erfaßten Daten der Einrichtung 2 werden kontinuierlich an die Auswerteeinrichtung 6 übergeben und dort zu einem vollständigen Umgebungsbild zusammengesetzt, wobei die Bewertung der Daten von den Sensoren 7 - 9 in Abhängigkeit von den Witterungsbedingungen und der Tageszeit erfolgt, die der Auswerteeinheit 6 zugeführt werden. Zusätzlich kann die Auswerteeinheit 6 auch auf in einer digitalen Karte eines Navigationssystems abgelegte Informationen zurückgreifen. Das erzeugte Umgebungsbild beinhaltet die Straßenführung, Ausweichfläche, Anzahl, Abstand und jeweilige Relativgeschwindigkeit von Objekten bzw. Hindernissen und eine Klassifizierung der Objekte. Die Klassifizierung erstreckt sich vorwiegend darauf, ob die Objekte ungeschützte Personen wie Fußgänger oder Radfahrer, geschützte Person wie andere Kraftfahrzeugführer oder leblose Objekte sind. Die Sensoren 4, 5 zur Erfassung von Fahrzeugzustandsdaten erfassen die Fahrzeuggeschwindigkeit, den Reibwert des Untergrundes, den aktuellen Lenkwinkel und ähnliche Daten, die ebenfalls der Auswerteeinheit 6 zugeführt werden. Die Auswerteeinheit 6 überprüft, ob vorgeschriebene Sicherheitszustände zu anderen Kraftfahrzeugen eingehalten werden und ob das Kraftfahrzeug auf einem Kollisionskurs zu einem erfaßten Objekt ist. Ergibt sich bei dieser Überprüfung, daß alle Sicherheitsabstände eingehalten werden und auch sonst keine Kollisionsgefahr gegeben ist, so erzeugt die Auswerteeinheit 6 kein Steuersignal für die Aktuatoren 10 - 12. Die Aktuatoren 10 - 12 sind beispielsweise die Brems-, Beschleunigungs- und Lenkeinrichtung des Kraftfahrzeuges, die vorzugsweise als x-by-wire-Systeme ausgebildet sind. X-by-wire-Systeme sind mechanisch entkoppelte Einrichtungen, bei denen eine mechanische Stellbewegung in ein elektrisches Stellsignal gewandelt und einem Steuergerät zugeführt wird, das dann die eigentliche Systemkomponente rein elektrische ansteuert. Durch eine elektrische Verbindung zwischen Auswerteeinheit 6 und den Steuergeräten der x-by-wire-Systeme läßt sich somit sehr einfach ein Eingriff in die Fahrdynamik realisieren.

Ergibt die Überprüfung der Auswerteeinheit 6 hingegen, daß beispielsweise ein Sicherheitsabstand zu gering ist, so berechnet diese eine Ausweichstrategie, um die Verkehrssituation zu entschärfen. Im einfachsten Fall ist dies ein Stellsignal, mittels dessen die Geschwindigkeit des Fahrzeuges an die des erfaßten Objekts angepaßt wird, so daß der erforderliche Sicherheitsabstand wieder eingehalten wird. Ist eine derartige Strategie nicht mehr möglich, weil beispielsweise der Abstand bereits zu gering ist, so wird überprüft, ob noch eine Ausweichstrategie ohne Kollision möglich ist, indem beispielsweise das Fahrzeug auf eine freie Verkehrsfläche gelenkt wird. Ergibt die Überprüfung der Auswerteeinheit 6, daß keine Ausweichstrategie mehr möglich ist, mit der eine Kollision noch verhindert werden kann, so wird eine gezielte Kollision durchgeführt.

Dazu berechnet die Auswerteeinheit 6 verschiedene Kollisionsstrategien. Anschließend werden die verschiedenen Kollisionsstrategien unter Berücksichtigung der erfaßten Sitzbelegung der Sitzbelegungserkennungseinrichtung 3 nach der jeweiligen Schadensschwere bewertet. Dazu wird vorzugsweise eine Kollisionsstrategie ausgewählt, bei der keine Personen zu Schaden kommen, d. h. es wird eine Kollision mit einem leblosen Objekt durchgeführt, wenn dabei Fahrer und weitere Insassen nicht einer übermäßigen Gefahr ausgesetzt werden. Hierfür wird das Kraftfahrzeug derart angesteuert, daß die meiste Stoßenergie von unbesetzten Fahrzeugbereichen aufgenommen wird, d. h. das Fahrzeug wird mit den unbesetzten Bereichen zum Kollisionsobjekt gedreht. Ist das Fahrzeug voll besetzt, so wird der Fahrzeugbereich gewählt, der am meisten Stoßenergie als Knautschzone aufnehmen kann. Sinngemäß gelten die Ausführungen, falls eine Kollision mit einem anderen besetzten Fahrzeug durchgeführt wird. Dazu kann beispielsweise für die Schadensabschätzung die Sitzbelegung des Kollisionsfahrzeuges mittels der Kamera 9 erfaßt und bei der Kollisionsstrategie mit berücksichtigt werden. Ein zusätzlicher Bewertungsfaktor kann beispielsweise die durch die Sitzbelegungserkennungseinrichtung 3 erfaßte Klassifizierung der Besetzung sein, beispielsweise ob es sich um ein Baby, ein Kleinkind oder einen Erwachsenen handelt. Dazu kann der Sitzbelegungserkennungseinrichtung 3 eine Kamera oder ein Gewichtssensor zugeordnet sein, aus dessen Daten auf die Person zurückgeschlossen werden kann. Der Gewichtssensor kann zur Reduzierung des Fehlers aufgrund der Sitzstellung mit einem Neigungswinkel-Sensor der Rückenlehne und/oder einem Fußstellungs-Sensor kombiniert werden. Da Babys und Kleinkinder sehr viel empfindlicher auf einen Zusammenstoß reagieren, wird dann vorzugsweise eine Strategie gewählt, bei der der Schaden für diese möglichst gering ist.

### BEZUGSZEICHENLISTE

- 1: Vorrichtung zur Vermeidung und/oder Minimierung von Konfliktsituationen
- 2: Einrichtung zur Erfassung eines Abbildes
- 3: Sitzbelegungserkennungseinrichtung
- 4, 5: Sensoren zur Erfassung von Fahrzeugzustandsdaten
- 6: Auswerteeinrichtung
- 7: Laser-Sensoren
- 8: Radar-Sensoren
- 9: Wärmebildkamera
- 10 - 12: Aktuatoren

## Patentansprüche

1. Vorrichtung zur Vermeidung und/oder Minimierung von Konfliktsituationen im Straßenverkehr für den Einsatz in einem Kraftfahrzeug, umfassend eine Einrichtung (2) zur Erfassung eines Abbildes der Umgebung des Kraftfahrzeuges, Sensoren (4, 5) zur Erfassung von Fahrzeugzustandsdaten und eine Auswerteeinrichtung (6), der die Daten über die Umgebung und die Fahrzeugzustandsdaten zuführbar sind, wobei die Auswerteeinrichtung (3) mit einer Vielzahl von gegebenenfalls anzusteuernden Aktuatoren (10 - 12) verbunden ist, wobei der Vorrichtung (1) eine Sitzbelegungserkennungseinrichtung (3) zugeordnet ist, deren erfasste Sitzbelegung der Auswerteeinrichtung (6) zuführbar ist, die sitzbelegungsabhängige Steuersignale für die Aktuatoren (10 - 12) erzeugt,
**dadurch gekennzeichnet, dass**
mittels der Auswerteeinrichtung (6) eine aktuelle Verkehrssituation auf Einhaltung von Sicherheitskriterien überprüfbar ist, wobei die Auswerteeinrichtung (6) Steuersignale für die Aktuatoren (10 - 12) zur Durchführung einer Ausweichstrategie erzeugt, falls ein Sicherheitskriterium verletzt wird und durch die Ausweichstrategie die verletzten Sicherheitskriterien wieder eingehalten werden, oder Berechnung von verschiedenen Sätzen von Steuersignalen durch die Auswerteeinrichtung zur Durchführung einer gezielten Kollisionsstrategie, falls eine Ausweichstrategie nicht möglich ist, wobei die verschiedenen Kollisionsstrategien unter Berücksichtigung der Sitzbelegung nach Schadensminimierung bewertbar sind und die Auswerteeinrichtung (6) den Satz von Steuersignalen mit der geringsten Schadensfolge an die Aktuatoren (10 - 12) übergibt.

2. Vorrichtung nach Anspruch 1, **dadurch gekennzeichnet, dass** die Sitzbelegungserkennungseinrichtung (3) mindestens eine Kamera umfasst.

3. Vorrichtung nach Anspruch 1 oder 2, **dadurch gekennzeichnet, dass** die Sitzbelegungserkennungseinrichtung (3) den jeweiligen Fahrzeugsitzen zugeordnete Gewichtssensoren umfasst.

4. Vorrichtung nach einem der vorangegangenen Ansprüche, **dadurch gekennzeichnet, dass** die Einrichtung (2) zur Erfassung eines Abbildes der Umgebung mindestens eine Kamera (9) und/oder einen Laser-Sensor (7) und/oder einen Radar-Sensor (8) umfasst.

5. Vorrichtung nach Anspruch 4, **dadurch gekennzeichnet, dass** die Kamera (9) als Videound/oder Wärmebildkamera ausgebildet ist.

6. Verfahren zur Vermeidung und/oder Minimierung von Konfliktsituationen im Straßenverkehr mittels einer Einrichtung (2) zur Erfassung eines Abbildes der Umgebung des Kraftfahrzeuges, Sensoren (4, 5) zur Erfassung von Fahrzeugzustandsdaten, einer Auswerteeinrichtung (6) und einer Sitzbelegungserkennungseinrichtung (3), umfassend folgende Verfahrensschritte:
a) Kontinuierliche Übergabe der erfassten Daten der Einrichtung zur Erfassung eines kontinuierlichen Abbildes der Umgebung und der Sensoren (4, 5) zur Erfassung von Fahrzeugzustandsdaten an die Auswerteeinrichtung (6),
b) Übergabe der Daten der Sitzbelegungserkennungseinrichtung (3) an die Auswerteeinrichtung (6),
c) Überprüfung der aktuellen Verkehrssituation auf Einhaltung von Sicherheitskriterien,
**dadurch gekennzeichnet, dass**
d) Erzeugung von Steuersignalen für die Aktuatoren (10 - 12) durch die Auswerteeinrichtung (6) zur Durchführung einer Ausweichstrategie, falls ein Sicherheitskriterium verletzt wird und dadurch die verletzten Sicherheitsstrategien wieder eingehalten werden können oder
e) Berechnung von verschiedenen Sätzen von Steuersignalen zur Durchführung einer gezielten Kollisionsstrategie, falls eine Ausweichstrategie nach Verfahrensschritt d) nicht möglich ist,
f) Bewertung der verschiedenen Kollisionsstrategien unter Berücksichtigung der Sitzbelegung nach Kriterium der Schadensminimierung und
g) Auswahl und Übergabe des Satzes von Steuersignalen an die Aktuatoren mit der geringsten Schadensfolge.

## Claims

1. Device for avoiding and/or minimizing conflict situations in road traffic for use in a motor vehicle, comprising an apparatus (2) for sensing a representation of the surroundings of the motor vehicle, sensors (4, 5) for sensing vehicle-state data and an evaluation apparatus (6) to which the data relating to the surroundings and the vehicle-state data can be fed, the evaluation apparatus (6) being connected to a plurality of actuators (10-12) which are to be actuated if necessary, the device being assigned a seat-occupancy detection device (3) whose sensed seat occupancy can be fed to the evaluation apparatus (6) which generates seat-occupancy-dependent control signals for the actuators (10-12),
**characterized in that**
a current traffic situation can be checked for compliance with safety criteria by means of the evaluation apparatus (6), the evaluation apparatus (6) generating control signals for the actuators (10-12) in order to carry out an avoidance strategy if a safety criterion is infringed and the infringed safety criteria are complied with again by means of the avoidance strategy, or calculation of different sets of control signals by the evaluation device in order to carry out a selective collision strategy if an avoidance strategy is not possible, it being possible to evaluate the various collision strategies taking into account the seat occupation after minimization of damage, and the evaluation apparatus (6) passing the set of control signals with the least consequent damage to the actuators (10-12).

2. Device according to Claim 1, **characterized in that** the seat-occupancy detection device (3) comprises at least one camera.

3. Device according to Claim 1 or 2, **characterized in that** the seat-occupancy detection device (3) comprises weight sensors assigned to the respective vehicle seats.

4. Device according to one of the preceding claims, **characterized in that** the apparatus (2) for sensing a representation of the surroundings comprises at least one camera (9) and/or one laser sensor (7) and/or one radar sensor (8).

5. Device according to Claim 4, **characterized in that** the camera (9) is designed as a video camera and/or thermal imaging camera.

6. Method for avoiding and/or minimizing conflict situations in road traffic by means of an apparatus (2) for sensing a representation of the surroundings of the motor vehicle, sensors (4, 5) for sensing vehicle-state data, an evaluation apparatus (6) and a seat-occupancy detection device (3), comprising the following method steps:
a) continuous passing of the sensed data from the apparatus for sensing a continuous representation of the surroundings and from the sensors (4, 5) for sensing vehicle-state data to the evaluation apparatus (6),
b) passing of the data of the seat-occupancy detection device (3) to the evaluation apparatus (6),
c) testing of the current traffic situation for compliance with safety criteria,
**characterized by**
d) generation of control signals for the actuators (10-12) by the evaluation apparatus (6) for carrying out an avoidance strategy if a safety criterion is infringed, and as a result the infringed safety strategies can be complied with again, or
e) calculation of various sets of control signals for carrying out a targeted collision strategy if an avoidance strategy according to method step d) is not possible,
f) evaluation of the various collision strategies taking into account the seat occupancy according to the criterion of damage minimization, and
g) selection and passing of the set of control signals to the actuators with the minimum consequences in terms of damage or injury.

## Revendications

1. Appareil pour éviter et/ou minimiser les situations de conflit dans le trafic routier destiné à être installé dans une voiture, comprenant un dispositif (2) pour l'enregistrement d'une représentation de l'environnement de la voiture, des capteurs (4, 5) pour l'enregistrement de données concernant l'état de la voiture et un dispositif de traitement (6) vers lequel peuvent être acheminées les données concernant l'environnement et les données concernant l'état de la voiture, le dispositif de traitement (6) étant relié à une multiplicité d'actionneurs (10 - 12) à actionner le cas échéant, l'appareil (1) étant associé à un dispositif de reconnaissance de l'occupation des sièges (3) dont l'enregistrement de l'occupation des sièges peut être acheminé au dispositif de traitement (6) qui génère des signaux de commande dépendant de l'occupation des sièges pour les actionneurs (10 - 12), **caractérisé en ce qu'**on peut vérifier une situation présente du trafic pour respecter des critères de sécurité au moyen du dispositif de traitement (6), qui génère des signaux de commande pour les actionneurs (10 - 12) pour réaliser une stratégie d'évitement dans le cas où un critère de sécurité est violé et où la stratégie d'évitement permet de respecter à nouveau les critères de sécurité violés, ou calculer différentes séries de signaux de commande par le dispositif de traitement pour réaliser une stratégie de collision ciblée dans le cas où une stratégie d'évitement n'est pas possible, les différentes stratégies de collision pouvant être évaluées pour minimiser les dégâts en respectant l'occupation des sièges et le dispositif de traitement (6) transmettant aux actionneurs (10 - 12) la série de signaux de commande entraînant le minimum de dégâts.

2. Appareil selon la revendication 1, **caractérisé en ce que** le dispositif de reconnaissance de l'occupation des sièges (3) comporte au moins une caméra.

3. Appareil selon la revendication 1 ou 2, **caractérisé en ce que** le dispositif de reconnaissance de l'occupation des sièges (3) comporte des capteurs de poids associés à chaque siège du véhicule.

4. Appareil selon une des revendications précédentes, **caractérisé en ce que** le dispositif (2) pour l'enregistrement d'une représentation de l'environnement comporte au moins une caméra (9) et/ou un capteur laser (7) et/ou un capteur radar (8).

5. Appareil selon la revendication 4, **caractérisé en ce que** la caméra (9) est de type caméra vidéo et/ou caméra d'image thermique.

6. Procédé pour éviter et/ou minimiser les situations de conflit dans le trafic routier au moyen d'un dispositif (2) pour l'enregistrement d'une représentation de l'environnement de la voiture, de capteurs (4, 5) pour l'enregistrement de données concernant l'état de la voiture, d'un dispositif de traitement (6) et d'un dispositif de reconnaissance de l'occupation des sièges (3), comprenant les étapes suivantes du procédé :
a) transfert permanent vers le dispositif de traitement (6) des données enregistrées du dispositif pour l'enregistrement d'une représentation permanente de l'environnement et des capteurs (4, 5) pour l'enregistrement de données concernant l'état de la voiture,
b) transfert vers le dispositif de traitement (6) des données du dispositif de reconnaissance de l'occupation des sièges (3),
c) vérification de la situation présente du trafic en respectant des critères de sécurité,
**caractérisé par**
d) la génération par le dispositif de traitement (6) de signaux de commande pour les actionneurs (10 - 12) pour réaliser une stratégie d'évitement dans le cas où un critère de sécurité est violé et permettant ainsi de respecter à nouveau les stratégies de sécurité violées, ou
e) le calcul de différentes séries de signaux de commande pour réaliser une stratégie de collision ciblée dans le cas où une stratégie d'évitement selon l'étape du procédé d) n'est pas possible,
f) l'évaluation des différentes stratégies de collision en respectant l'occupation des sièges selon le critère de la minimisation des dégâts, et
g) le choix et la transmission aux actionneurs de la série de signaux de commande entraînant le minimum de dégâts.
